Europäisches Patentamt

European Patent Office

Office européen des brevets

(19)

(11) **EP 0 729 880 B1**

(12) **EUROPEAN PATENT SPECIFICATION**

(45) Date of publication and mention
of the grant of the patent:
**28.08.2002 Bulletin 2002/35**

(51) Int Cl.[7]: **B62M 23/02**, H02J 7/00,
H01M 10/48

(21) Application number: **96103306.5**

(22) Date of filing: **04.03.1996**

(54) **Electrically assisted pedal operated vehicle**

Elektrisch unterstütztes pedalbetriebenes Fahrzeug

Véhicules à entraînement par pédales et à assistance électrique

(84) Designated Contracting States:
**BE DE ES FR IT**

(30) Priority: **03.03.1995 JP 4415795**

(43) Date of publication of application:
**04.09.1996 Bulletin 1996/36**

(73) Proprietor: **YAMAHA HATSUDOKI KABUSHIKI KAISHA**
**Iwata-shi Shizuoka-ken, 438 (JP)**

(72) Inventors:
• **Saito, Mikio**
**Iwata-shi, Shizuoka-ken (JP)**

• **Ito, Masaki**
**Iwata-shi, Shizuoka-ken (JP)**

(74) Representative: **Grünecker, Kinkeldey,**
**Stockmair & Schwanhäusser Anwaltssozietät**
**Maximilianstrasse 58**
**80538 München (DE)**

(56) References cited:
• **PATENT ABSTRACTS OF JAPAN vol. 16, no. 339**
**(M-1284), 22 July 1992 & JP 04 100790 A**
**(YAMAHA), 2 April 1992,**

## Description

This invention relates to an electrically assisted pedal operated vehicle, in particular bicycle, comprising a human power drive system and an electrical drive system provided in parallel to each other, whereby said electrical drive system further comprises an electric motor and at least one battery as a power source for said electric motor, and a control system for controlling an assist torque of said electrical drive system in accordance with a torque applied to said human power drive system by a user of said vehicle and a method of controlling the discharge of at least one battery for an electric motor of an electrically assisted pedal operated vehicle, in particular bicycle, comprising a human power drive system and an electrical drive system provided in parallel to each other, whereby said electrical drive system further comprises an electric motor and at least one battery as a power source for said electric motor, and a control system for controlling an assist torque of said electrical drive system in accordance with a torque applied to said human power drive system by a user of said vehicle.

It is known that the battery for powering said electric motor (in the following secondary battery) deteriorates prematurely and its life becomes short when it is discharged beyond a certain limit. Therefore, when the secondary battery is used in the motor-operated vehicle as described above, it is arranged that a control system which supplies power to the motor is stopped when the voltage of the secondary battery (hereinafter referred to as "battery voltage") runs down to a specified threshold value.

Some motor-assisted bicycles are constituted to supply an assist torque from a motor in proportion to the pedal force applied to the pedals by the rider. In such bicycles, since the discharge current of the secondary battery changes from moment to moment, the battery voltage also changes according to decrease in the voltage due to internal resistance. Therefore, if the threshold value for stopping the power supply system is made constant and a large current flows out from the battery, the battery voltage decreases below the threshold value although the battery has still a remaining power. As a result, the battery ends up in being charged while it is not discharged enough.

It is known that, if the battery is charged repeatedly without being discharged enough, the battery voltage at the time of discharging lowers. This phenomenon is called the memory effect. It is also known that, when the battery is then discharged enough and charged again, the battery voltage is restored. However, if the battery is used with the memory effect occurring in the battery, a vicious circle is repeated that the battery voltage becomes more likely to decrease below the threshold value, the battery is charged prematurely, and as a result, the battery cannot be used effectively.

Japanese Examined Patent Publication Hei 2-56688 has proposed a technique to set plural threshold values corresponding to the magnitude of the output current of a battery and select a threshold value according to a current value for suppressing torque ripples of an electric motor supplied by said battery.

In the motor-assisted bicycle, however, the current value changes largely because the current value is changed according to the pedal force applied to the pedals. However, the above-mentioned technique has also a disadvantage that the software design becomes complicated because plural threshold values have to be set according to amounts of changes in the current values. Even if the plural threshold values are set, when the output current changes in between adjacent threshold values, the threshold value becomes constant. Therefore, it is likely that the control system for supplying power to the motor is stopped when the stop is not required or the power remains to be supplied when the stop is required, and results in excessive discharge.

Accordingly, it is an objective of the present invention to provide an improved electrically assisted pedal operated vehicle as indicated above which is capable of reliably controlling the battery voltage in order to prevent an excessive discharge and occurrence of the memory effect of said battery.

According to the invention, this objective is solved for an electrically assisted pedal operated vehicle as indicated above by a means for determining at least one variable threshold value according to the current valve of said at least one battery for controlling the discharge of said at least one battery.

It is a further objective of the present invention to provide an improved method of controlling the discharge of at least one battery for an electric motor of an electrically assisted pedal operated vehicle as indicated above which ensures the reliable monitoring and control of the battery voltage to prevent an excessive discharge and the occurrence of memory effect for said battery.

According to the invention, this objective is solved for a method as indicated above in that at least one variable threshold value is determined according to the detected current value of said battery and that the discharge of said battery is controlled in dependence of the current values detected.

According to an embodiment of the invention, said electrically assisted pedal operated vehicle comprises control means for controlling the current from said battery in accordance with said torque applied to said human power drive system, voltage detection means for detecting the voltage of said battery, and current detection means for detecting the value of said current.

In order to enhance the discharge of said battery or to receive an optimum discharge, it is advantageous when said means for determining said at least one threshold value is capable of continuously changing said threshold value to be generally constant when said current value is between zero and a first limit value.

This effect may be further enhanced when said means for determining said at least one threshold value is capable of continuously changing said threshold value so that said threshold value decreases with the increase of said current value to be generally constant when said current value is equal to or larger than a second limit value being smaller than a possible maximum value of said current.

According to another embodiment of the invention, said electrically assisted pedal operated vehicle further comprises a warning cutoff determination section for comparing said battery voltage with said at least one threshold value and for indicating and cutting off the current supply to said electric motor when the remaining battery voltage is small.

The adaptability to different operational conditions is enhancable when said means for determining said at least one threshold value is capable of determining a plurality of threshold values of different levels.

In order to enhance the convenience of a user, it is advantageous when said warning cutoff determination section is capable of gradually decreasing the ratio of said assist torque to said torque applied to said human power drive system as an indication of low remaining battery voltage.

According to a further embodiment of the invention, said means of determining said plurality of threshold valves is capable of determining said threshold values at three levels and said warring cutoff determination section is capable of indicating by means of light means and/or sound means that said battery voltage is passing the maximum level, by means of a force device for gradually decreasing the ratio of said assist torque to said torque applied to said human power drive system that said battery voltage is passing the medium level, and by means of a force device that said battery voltage is passing the minimum level.

Other preferred embodiments of the present invention are laid down in further dependent claims.

With the electrically assisted pedal operated vehicle according to an embodiment of the invention, the threshold value changes according to the change in the current value of the secondary battery. Therefore, an optimum threshold value corresponding to the current value of the secondary battery is continuously set and the secondary battery voltage can be reliably monitored and controlled.

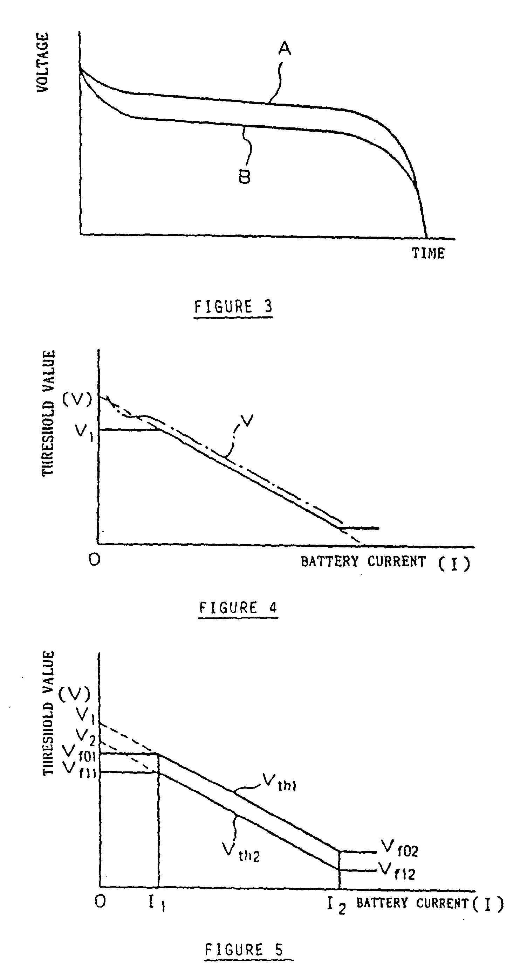

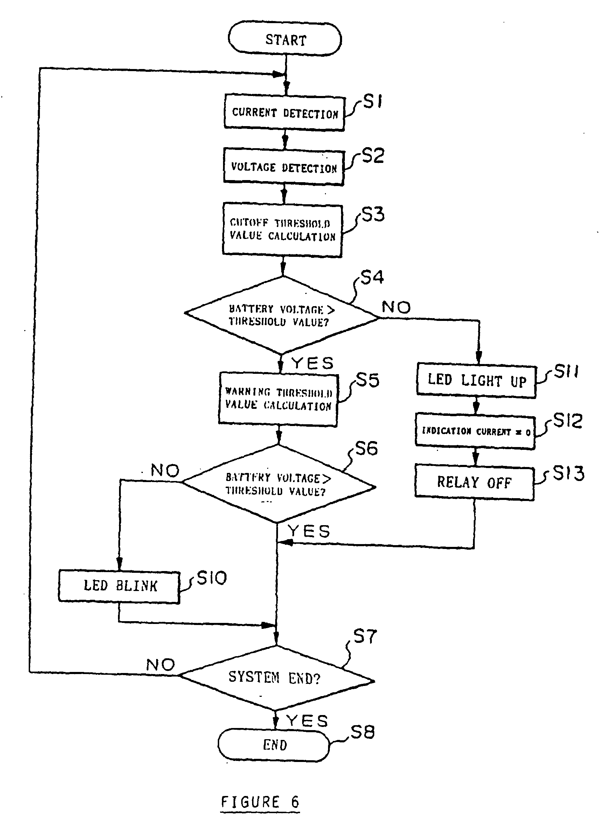

According to another embodiment, while the threshold value changes in inverse proportion to the secondary battery current, the threshold value does not increase with the decrease in the current value but remains constant while the current value is equal to or smaller than the first boundary value. The reason for setting the threshold value in this way is as follows. That is to say, as shown in FIG. 3, while the battery voltage decreases with the lapse of time of use, comparison between a new secondary battery (shown with A in the figure) and an old secondary battery or a secondary battery in which the memory effect has occurred (shown with B in the figure) shows that the old battery shows steeper decrease in the battery voltage after starting discharge. As a result, as shown with a phantom line in FIG. 4, the battery voltage decreases rapidly when only a small current is discharged. Here, if it is assumed that the threshold value is changed in inverse proportion over the entire range of the secondary battery current value as shown with the sloped line (including the broken line) in FIG 4, the battery voltage decreases below the threshold value immediately after starting discharge, and a process for stopping the discharge is carried out. Therefore, the secondary battery becomes practically useless when it is old to a certain extent.

Further, since the upper limit of the threshold value is set within a low range of current value, the battery voltage does not decrease below the threshold value as a result of rapid decrease immediately after starting discharge. Therefore, the secondary battery is used effectively.

While the battery voltage at a given moment changes according to the current value at that moment, it is known that life of the battery becomes short when it is used at too low a voltage. According to a further embodiment, since the lower limit of the threshold value is set within a high range of current value, an appropriate process such as stopping the control system can be applied when the battery voltage becomes equal to or lower than the threshold value, preventing the secondary battery from being excessively discharged and prolonging the life of the secondary battery.

With a still further embodiment , since power supply to the motor is stopped when the battery voltage decreases to or below the threshold value, excessive discharge is prevented and at the same time the user feels loss of assist torque and knows that the battery has run down.

According to still another embodiment, the user may be appropriately informed in steps according to the extent of lowering in the battery voltage. For example, as specifically described below, a system can be constituted with high safety to provide information perceived by visual and hearing senses in the first step, information perceived by bodily feeling such as decrease in the ratio of assist torque in the second step, and information on stop of assist torque in the third step.

With a further embodiment, since the information perceived by visual and hearing senses is given when the secondary battery voltage decreases to or below the higher level of threshold value, the user can learn that the battery voltage has decreased to the first level. Furthermore, since the information perceived by the bodily feeling is given when the battery voltage decreases to or below the lower level of threshold value, the user can learn that the battery voltage has decreased to the second level. Even if the user overlooked the information that can be perceived by the visual and hearing senses, the user can reliably recognize the decrease in the battery voltage.

With another embodiment since the ratio of the assist torque to the human power is gradually decreased and the load on the user is gradually increased, the user can reliably learn that the battery voltage has decreased. Furthermore, since the load on the user does not increase suddenly, the user can ride safely.

With still another embodiment since the Information perceived by the bodily feeling is the decrease in the assist torque to zero, the user can reliably learn the decrease in the battery voltage from the increase in the load on the user so that the battery is prevented from being discharged excessively. Furthermore, since the decrease in the assist torque to zero can be anticipated from the information perceived by the visual and hearing senses, safety is secured even if the load on the user is increased suddenly.

With a still further embodiment since the information perceived by the visual and hearing senses is given when the battery voltage decreases to the first level, the user can learn that the battery voltage has decreased to the first level. Since the ratio of the assist torque to the human power is gradually decreased when the battery voltage decreases to the second level, the load on the user increases gradually so that the user can learn reliably the decrease in the battery voltage. Furthermore, since the load on the user does not increase suddenly, the rider can ride safely. The user can anticipate the decrease in the battery voltage to the third level and the decrease in the assist torque to zero, the load on the user increases gradually with less shock so that the user can ride more safely.

In the following, the present invention is explained in greater detail with respect to several embodiments thereof in conjunction with the accompanying drawings, wherein:

FIG. 1 is a side view of a motor-assisted bicycle as an embodiment of this invention; .
FIG. 2 is a block diagram of a circuit as the first embodiment of this invention;
FIG. 3 is a graph of relationship between the time in use and the voltage of a secondary battery for describing the principle of this invention;
FIG. 4 is a graph of relationship between the threshold value and the battery voltage for describing the principle of this invention;
FIG. 5 is a graph of threshold values for use in the first embodiment;
FIG. 6 is a flow chart of the function of the first embodiment;
FIG. 7 is a flow chart of the function of an example modification of the first embodiment;
FIG. 8 is a block diagram of a circuit as the second embodiment of this invention;
FIG. 9 is a graph for describing the threshold values in the second embodiment;
FIG. 10 is a graph for describing the assist ratio gradual reduction in the second embodiment;
FIG. 11 is a flow chart for describing the function of the second embodiment; and
FIG. 12 is a flow chart of the assist ratio gradual reduction process in the second embodiment.

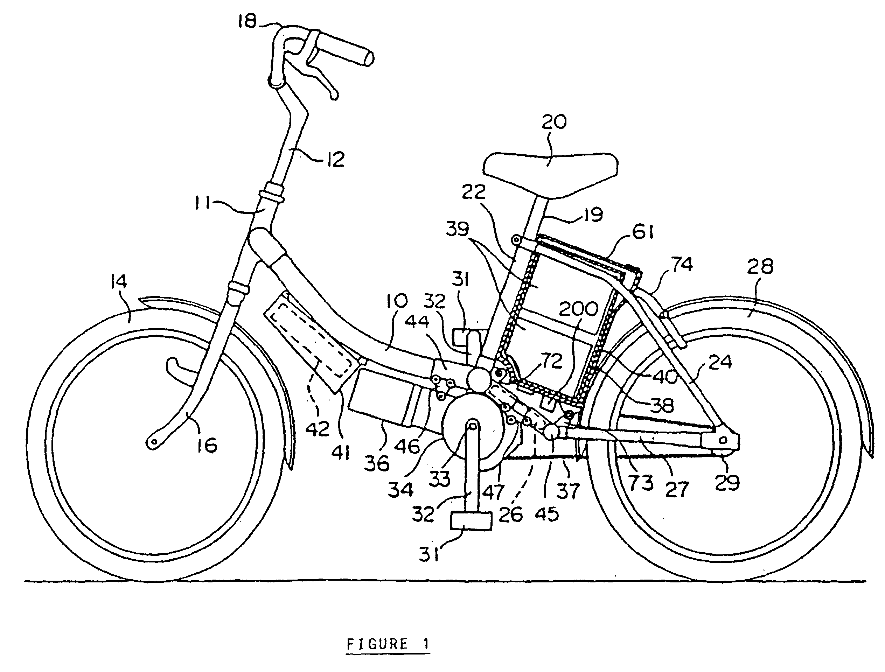

The first embodiment of this invention will be hereinafter described in reference to FIGs. 1 through 7.

FIG. 1 is a side view of a motor-assisted bicycle as an embodiment of this invention. Prior to the description of the embodiment, the constitution of the bicycle will be described. FIG. 1 shows the following components: A main tube 10 with its front end secured to a head tube 11. A handlebar stem 12 is inserted in the head tube 11 so as to be rotatable about the axis of the head tube 11. A right and left pair of forks 16 is secured to the lower portion of the handlebar stem 12. A front wheel 14 is rotatably attached to the front forks 16. Handlebars 18 extending in right and left directions are secured to the upper portion of the handlebar stem 12.

The main tube 10 extends from the front obliquely down backward and to its rear end is secured a middle lug 44 to which are secured a seat tube 22 and a rear tube 26. The main tube 10 is curved so as to droop down so that even a female rider with a skirt can ride easily by stepping across the main tube 10.

The seat tube 22 supports a seat post 19 to which is secured a seat 20. To the rear tube 26 is secured a pair of chain stays 27 through a hanger lug 45. The chain stays 27 and the seat tube 22 are connected to each other through a pair of seat stays 24. As shown, the seat tube 26, the seat stays 24, the rear tube 26 and the chain stays 27 constitute a generally triangular shape in side view so as to support the weight of the rider when the rider rides the bicycle. To the connecting portions of the seat stays 24 and the chain stays 27 is rotatably attached a rear wheel 28.

A power unit 34 is attached to a position below the middle lug (44) and the hanger lug 45 through brackets 46 and 47. The power unit 34 is made up of a human power drive system, a motor drive system, and a resultant force mechanism for combining the power of both systems. To the case of the power unit 34 is attached a crankshaft 33 to which are attached cranks 32 to each of which is attached a pedal 31. The symbol 36 denotes a motor.

Rotation of the crankshaft 33 when the user depresses the pedals 31 is transmitted through one mechanism in the power unit 34 to the chain 37 and further to the rear wheel 28 through a freewheel 29. By the rotation of the rear wheel 28, the motor-assisted bicycle is propelled. When the motor 36 is rotated on the other hand, the rotation of the rotor of the motor 36 is transmitted through the other mechanism in the power unit 34 to the chain 37. This also rotates the rear wheel 28 Thus. the motor-assisted bicycle is provided with the human power drive system using the human power transmitted through the crankshaft 33 and with the motor drive system using power of the motor 36.

A casing 41 is attached under the main tube 10. A controller 42 is disposed in the casing 41. To the motor 36 is supplied drive current from chargeable (secondary) batteries 39. It is arranged so that the batteries 39 supply current to the motor 36 and the controller 42 regulates the amount of the current. That is to say, when the human drive power or the pedal force applied through the pedals 31, crank 32, and crankshaft 33 is great, the controller 42 increases the current flowing to the motor 36 and when the pedal force is small, the controller 42 decreases the current flowing to the motor 36. This makes it possible to increase the drive force of the motor 36 when the load on the rider is great so that the load on the rider is alleviated.

The batteries 39 are stowed in two layers in an inner box 38 which in turn is stowed in an outer box 40. The outer box 40 is disposed between the seat tube 22 and the rear wheel 28, and secured to the seat tube 22, seat stays 24, and rear tubes 26. A top lid 61 covers the outer box 40. When the top lid 61 is open, the inner box 38 can be put into or taken out of the outer box 40.

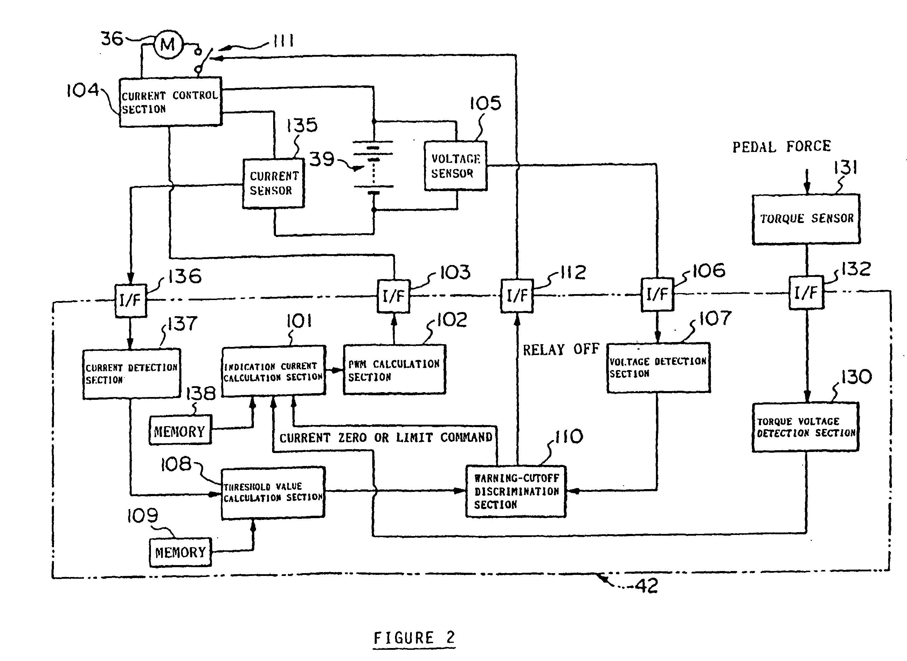

Next, the constitution of the assist.torque control system of the embodiment will be described in reference to FIG. 2. FIG. 2 is a block diagram generally showing the control circuit. As shown in FIG. 2, data representing the pedal force on the pedals 31 is inputted from a torque sensor 131 disposed in the power unit 34 through an interface 132 to a torque voltage detection section 130 of the controller 42 . The torque voltage detection section 130 converts the above-mentioned data to appropriate process signals and outputs them to an indication current calculation section 101.

The indication current calculation section 101 calculates an indication current in proportion to the pedal force and outputs the data to a PWM calculation section 102. The PWM calculation section 102 calculates a duty ratio of pulse current corresponding to the indication current, and outputs the calculated result through an interface 103 to a current control section (104). The current control section 104 controls so that the current pulse of the duty ratio calculated in the PWM calculation section 102 is supplied from the batteries 39 to the motor 36. The current supplied to the motor 36 is detected with a current sensor (current detection means) 135 and the data representing the current is output through an interface 136 to a current detection section 137. The current detection section 137 converts the data representing the current to an appropriate process signal and outputs it to a threshold value calculation section 108.

Based on the current value, the threshold value calculation section 108 calculates two levels of threshold values $V_{th1}$ and $V_{th2}$. In other words, the threshold value calculation section 108 reads an internal resistance value R, of the batteries 39, stored in a memory 109 and calculates the values shown by the following equations, assuming I as the value of current.

$$V_{th1} - V_1 - IR \qquad (1)$$

$$V_{th2} - V_2 - IR \qquad (2)$$

FIG. 5 is a graph showing the first threshold value (sub-threshold value) $V_{th1}$ and the second threshold value (sub-threshold value) $V_{th2}$ calculated from the above-mentioned equations. In the figure, the gradient of the oblique line shows the internal resistance R. The values $V_1$ and $V_2$ are determined by tests to obtain appropriate threshold values. The value $V_1$ is set so that the battery voltage V does not become lower than the first threshold value $V_{th1}$ when remaining power of the batteries is sufficient. The value $V_2$ is set so that the battery voltage V becomes lower than the second threshold value $V_{th2}$ when remaining power of the batteries is considerably small.

When the current value I is equal to or smaller than the first boundary value $I_1$, the threshold value calculation section 108 does not perform the above calculation but reads threshold values $V_{f01}$ and $V_{f11}$ stored in a memory 109. When the current value I is equal to or greater than the second boundary value $I_2$, the threshold value calculation section 108 does not perform the above calculation but reads threshold values $V_{f02}$ and $V_{f12}$ stored in the memory 109. The first threshold value $V_{th1}$ and the second threshold value $V_{th2}$ obtained by calculation or reading are output to a warning-cutoff determination section (informing means) 110.

Next, a voltage sensor (voltage detection means) 105 is connected to the batteries 39. The data representing the voltage of the batteries 39 is output through an interface 106 to a voltage detection section 107 of the controller 42. The voltage detection section 107 converts the above-mentioned data to an appropriate process signal and outputs it to the warning-cutoff determination section 110. The warning-cutoff determination section 110 performs calculation with the following equation using the detected voltage v to determine a battery voltage V .

$$V - v - IR \qquad (3)$$

The warning-cutoff determination section 110 compares the battery voltage V with the first and second threshold values $V_{th1}$ and $V_{th2}$ When the battery voltage V is between the first and second threshold values $V_{th1}$ and $V_{th2}$, an LED (not shown) provided on the handlebars 18 is made to blink. From the blinking of the LED, the rider learns that the remaining battery power has become small.

Next, the warning-cutoff determination section 110 supplies an exciting current to a coil (not shown) of a relay 111 interposed between the motor 36 and the current control section 104 when the battery voltage V is higher than the second threshold value $V_{th2}$; otherwise the current supply is stopped. The relay 111 is of a normally open type so as to make connection, while the exciting current is being supplied through the interface 112, between the motor 36 and the current control section 104, and breaks that connection when the exciting current supply is stopped. With this constitution, current supply to the motor 36 is stopped when the voltage of the batteries 39 becomes equal to or lower than the second threshold value $V_{th2}$. The warning-cutoff determination section 110, when the voltage of the batteries 39 is equal to or lower than the second threshold value $V_{th2}$, gives a signal to the indication current calculation section 101 so as to make the indication current zero. This stops current supply to the motor 36 even if, for example, the contact points of the relay 111 are caused to remain in contact with each other as caused by sparking or the like.

Next, the function of the motor-assisted bicycle constituted as described above will be described in reference to FIG. 6. When the bicycle is pedalled, an assist torque in proportion to the pedal force of the rider is output from the motor 36 to the power unit 34 . The current sensor 135 detects the current flowing to the motor 36 at that moment (step S1). The voltage sensor 105 detects the voltage v across the terminals of the batteries 39 (step S2). The voltage v includes a voltage drop portion IR caused by internal resistance of the batteries 39. Next, according to the current value I flowing to the motor 36 and the internal resistance of the batteries 39. the second threshold value $V_{th2}$ is calculated or read (step S3). The second threshold value $V_{th2}$ is for discriminating whether or not to stop the current supply to the motor 36 and is compared with the voltage v - IR of the batteries 39 in the step S4.

When the battery voltage V is greater than the second threshold value $V_{th2}$, the result of the discrimination in the step S4 is YES and the process goes to the step S5 to calculate or read the first threshold value $V_{th1}$. The first threshold value $V_{th1}$ is for discriminating whether or not a warning should be given to the rider when the battery voltage V decreases by a certain value. Next in the step S6, the first threshold value $V_{th1}$ is compared with the battery voltage V .

When the battery voltage V is greater than the first threshold value $V_{th1}$. the discrimination result in the step S6 is YES, and the process goes to the step S7 to discriminate whether or not the control system for the assist torque should be ended. When the main switch is turned off or when the assist torque should he made zero (to be described later), the process goes to step S8 to end the control; otherwise the process returns to the step S1 and repeats the steps S1 - S7.

The above is the process when the remaining power of the batteries 39 is sufficient. When the battery voltage decreases to or below the first threshold value $V_{th1}$ , the discrimination result in the step S6 is NO, and the process goes to the step S10 to blink the LED. As long as the main switch is not turned off, the steps S1 - S10 are repeated.

When the battery voltage V further decreases to the second threshold value $V_{th2}$, the discrimination result in the step S4 is NO, and the process goes to the step S11 to light up the LED which has been blinking. Next, the warning-cutoff discrimination section 110 outputs a signal for making the indication current value zero to the indication current calculation section 101, and at the same time turns off the relay 111 (steps S12 and S13). This stops the current supply to the motor 36 and makes the assist torque zero. In this case the control system comes to an end (steps S7 and S8).

With the motor-assisted bicycle of the constitution described above, since the first and second threshold values $V_{th1}$ and $V_{th2}$ change according to the change in the current value I of the batteries 39, optimum threshold values corresponding to the current value (I) of the batteries 39 may be continuously set so that reliable control is made by monitoring the voltage V of the batteries 39.

In the above embodiment in particular, while the first and second threshold values $V_{th1}$ and $V_{th2}$ change in inverse proportion to the battery current value, the first and second threshold values $V_{th1}$ and $V_{th2}$ are made constant when the current value I is not greater than the first boundary value $I_1$ or smaller than the second boundary value $I_2$. Therefore, though the battery voltage V decreases rapidly immediately after starting discharge when the period of use is long or when the battery 39 voltage is low as a result of the memory effect, the battery voltage V does not decrease to or below the first threshold value $V_{th1}$ or the second threshold value $V_{th2}$. Therefore, the process for warning or stopping discharge is not carried out, and the batteries 39 are used effectively. Furthermore, since the batteries 39 are prevented from being used at too low a voltage, the battery life is extended.

In the embodiment described above, since the LED is made to blink when the battery voltage V decreases to or below the first threshold value $V_{th1}$, the rider may learn that the battery voltage V has decreased. At the same time, since the rider can anticipate the decrease in the assist ratio to zero. the rider can secure safety even if the load on the rider increases at that time. Furthermore, since the current supply to the motor 36 is stopped when the battery voltage V decreases to or below the second threshold value $V_{th2}$, the batteries are prevented from being excessively discharged and at the same time, the rider can reliably learn that there is no remaining power in the batteries.

The first embodiment described above may be modified as described below by way of examples.

   ① In the first embodiment described above, the control may be made so that, when the battery voltage decreases to or below the second threshold

value ($V_{th2}$), the assist torque is not made immediately zero but the ratio of the assist torque to the pedal force is gradually decreased and made zero after running for a certain distance or a certain period of time.

② In the first embodiment described above, while the threshold values are set at two levels, a single level of threshold value may be possible. For example, it is possible to issue warning using the LED only, or to carry out a process only to make the assist torque zero. Also it is possible to decrease the assist torque gradually.

③ The control for gradually decreasing the assist torque as described above has an advantage of safer riding because of the gradual increase in the load on the rider. In such a control, however, when the main switch of the control system is turned off and then turned on, since the battery voltage is equal to or below the second threshold value $V_{th2}$, the gradual decrease in the assist torque is resumed upon turning on the main switch again. Therefore, as a result of repeating the on and off operation of the main switch, the battery voltage decreases without limit and ends up in excessive discharge.

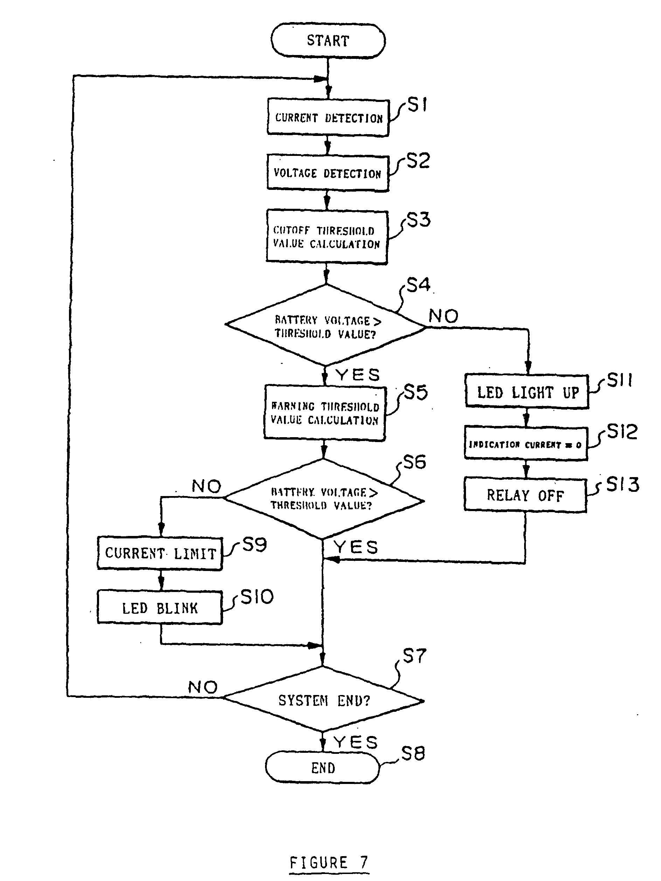

To eliminate such a disadvantage, a control is possible as shown in FIG. 7 so that the gradual decrease in the assist torque is started when the battery voltage V decreases to or below the first threshold value $V_{th1}$ (step S9) and that the assist torque is made zero when the battery voltage V decreases to or below the second threshold value $V_{th2}$. Details of such a constitution will be described below by way of the second embodiment. In that case, the arrangement may be such that a plural number of limit factors are stored in a memory 138 shown in FIG. 2, in advance in the order of addresses so as to decrease gradually, the limit factors are read in the order of addresses and multiplied by the indication current value, and the results are output to the PWM calculation section 102. By controlling in this way, excessive discharge is prevented because the control system comes to an end (step S7) when the battery voltage V decreases below the second threshold value $V_{th2}$. Furthermore, the battery capacity can be fully utilized because the batteries 39 can be used up until the battery voltage V decreases below the second threshold value $V_{th2}$.

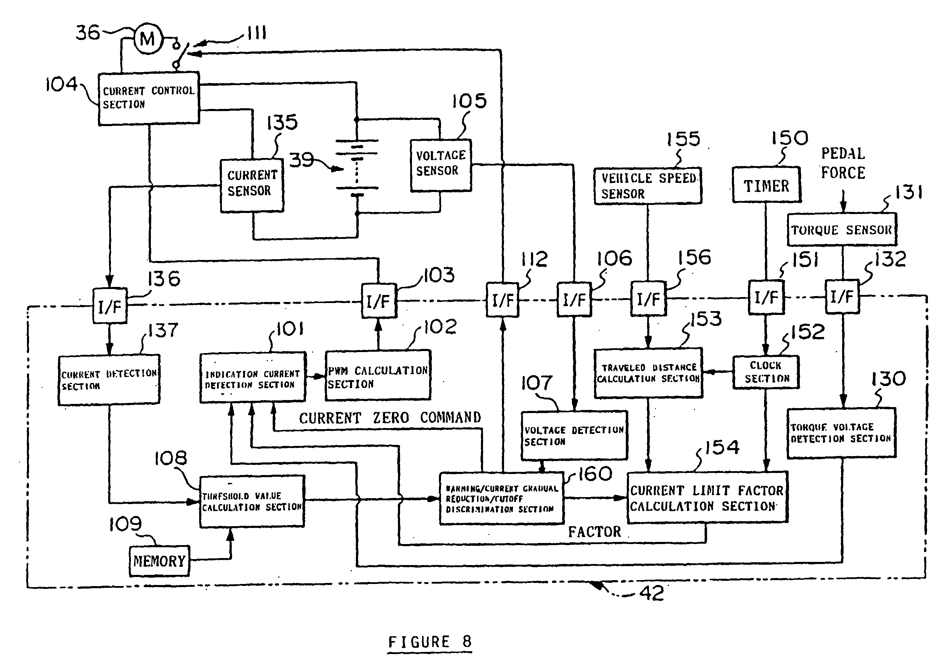

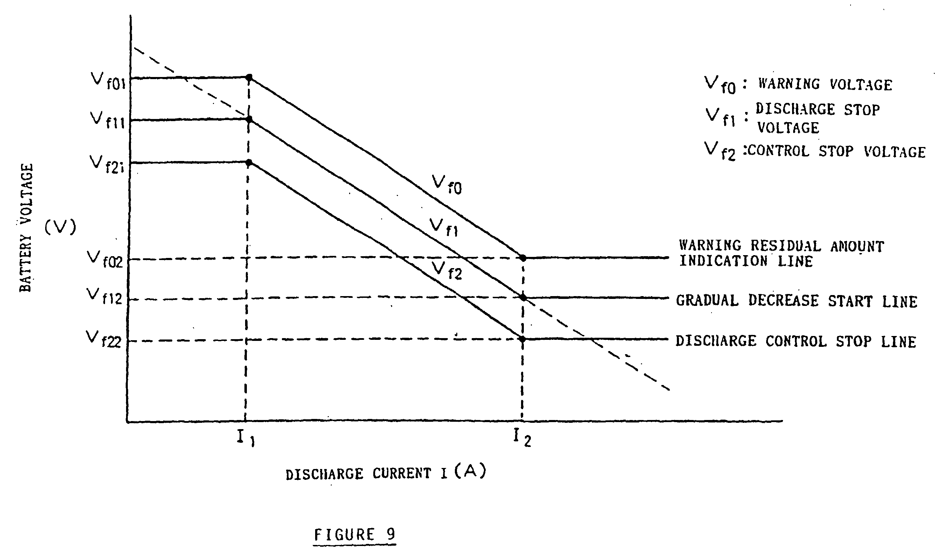

Next, the second embodiment of this invention will he described in reference to FIGs. 8 through 12. The second embodiment is characterized in that the threshold values are set at three levels so that three types of control are carried out corresponding to the extent of decrease in the battery voltage V. Specifically, as shown in FIG. 9, a warning with the LED is issued when the battery voltage decreases to or below the first threshold value $V_{th1}$, the gradual decrease in the assist torque is started when the battery voltage decreases to or below the second threshold value $V_{th2}$, and the control system is stopped when the battery voltage decreases to or below the third threshold value $V_{th3}$. Here, like the first embodiment described above, when the current value I is not greater than the first boundary value $I_1$ or not smaller than the second boundary value $I_2$, the threshold values $V_{th1}$, $V_{th2}$, and $V_{th3}$ are made constant.

FIG. 8 is a block diagram of a control circuit of the embodiment. In the description below, the same components as those in the first embodiment are provided with the same symbols and detailed descriptions of such components are omitted. Referring to the drawings, data representing elapsed time is issued from a timer 150 and output through an interface 156 to a clock section 152. The clock section 152 converts the data representing the elapsed time into suitable process signal and outputs it to a traveled distance calculation section 153 and to a current limit factor calculation section 154. Data representing the bicycle speed detected with a bicycle speed sensor 155 is output through an interface (156)to the traveled distance calculation section 153. The traveled distance calculation section 153 calculates the traveled distance of the bicycle by integrating the bicycle speed with time, and outputs the data representing the traveled distance to the current limit factor calculation section 154.

The current limit factor calculation section 154 calculates the limit factor when the assist torque is to be gradually decreased, and outputs data representing the limit factor to the indication current calculation section 101. The indication current calculation section 101 outputs result of multiplying together the indication current calculated to be in proportion to the pedal force and the limit factor to the PWM calculation section 102. As a result, the ratio of the assist torque to the pedal force decreases. The calculation of the limit factor is started by a command signal from a section 160 for warning, current gradual decrease, and cutoff discrimination.

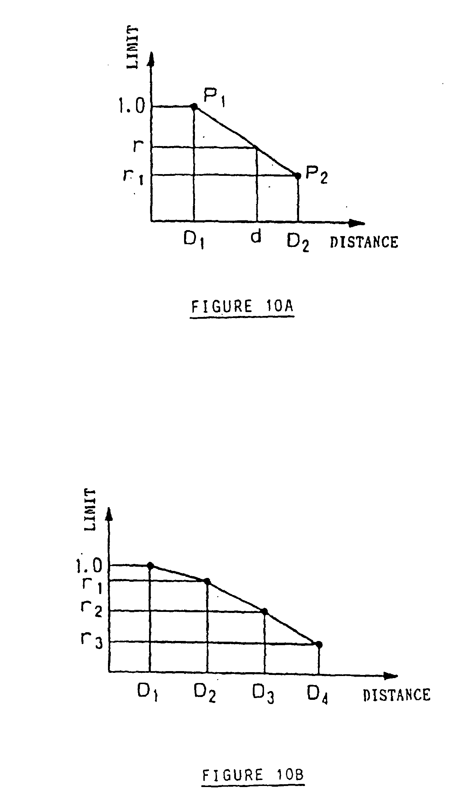

In this embodiment, the limit factor is linearly decreased with the increase in the distance traveled by the bicycle as shown in FIG. 10(A). This causes the ratio of the assist torque to the pedal force to decrease with the traveled distance. In other words, assuming a point $D_1$ at the time when the battery voltage V decreases below the first threshold value $V_{th1}$, the limit factor is linearly decreased from 1 to $r_1$ over the travel of the bicycle from the point $D_1$ to a point $D_2$. Therefore, a limit factor at a given point d is given by the equation below.

$$r = 1.0 - (d - D_1) \times (1.0 - r_1) \div (D_2 - D_1)$$

The limit factor may also be decreased with the traveled time. Calculation of the limit factor in this case may be done by replacing the distance parameters in the above equation with time parameters. Furthermore, a control is also possible to calculate limit factors for both traveled distance and traveled time and whichever greater limit factor is employed. By controlling in this way, more assist torque is given to the rider to make the riding safer.

It is also possible to control as shown in FIG. 10(B) so that the reduction rate of the limit factor is increased in steps according to the traveled distance. As shown in the figure, the limit factor changes linearly with a small reduction rate in the first zone $D_1$ - $D_2$ . The reduction rate of the limit factor is slightly increased in the next zone $D_2$ - $D_3$ and further increased in the next zone $D_3$ - $D_4$. Such a control reduces the shock when the assist torque begins to decrease and the bodily feeling of the rider is improved. Since the rider becomes accustomed to a heavy load some time after the assist torque begins to decrease, a large reduction rate is not felt so much as a heavy load.

The control shown in FIG. 10(B) may also be made so that the limit factor is reduced with the traveled time, or the limit factors are calculated for the traveled distance and traveled time respectively and whichever greater limit factor is employed. The control shown in FIG. 10(B) may also be made so that the reduction rate of the limit factor is increased when the traveled distance and traveled time reaches a next step $D_1$, $D_2$, ....

In this embodiment, the threshold value calculation section 108 does not perform the calculation described above when the current value I is not greater than the first boundary value $I_1$ but reads threshold values $V_{f01}$, $V_{f11}$ . and $V_{f21}$ (See FIG. 9) stored in the memory 109, and does not perform the calculation described above when the current value is not smaller than the second boundary value $I_2$ but reads threshold values $V_{f02}$ , $V_{f12}$ , and $V_{f22}$ stored in the memory 109. The first and second threshold values $V_{th1}$ and $V_{th2}$ obtained by calculation or reading are output to the section 160 for warning, current gradual decrease, and cutoff discrimination.

The section 160 for warning, current gradual decrease, and cutoff discrimination compares the battery voltage V with the first, second and third threshold values $V_{th1}$, $V_{th2}$, and $V_{th3}$. When the battery voltage V is between the first and second threshold values $V_{th1}$ and $V_{th2}$, the LED is caused to blink. When the battery voltage V is between the second and third threshold values $V_{th2}$ and $V_{th3}$, a signal for limiting the current supplied to the motor 36 is output to the indication current calculation section 101 and at the same time the LED is caused to light up.

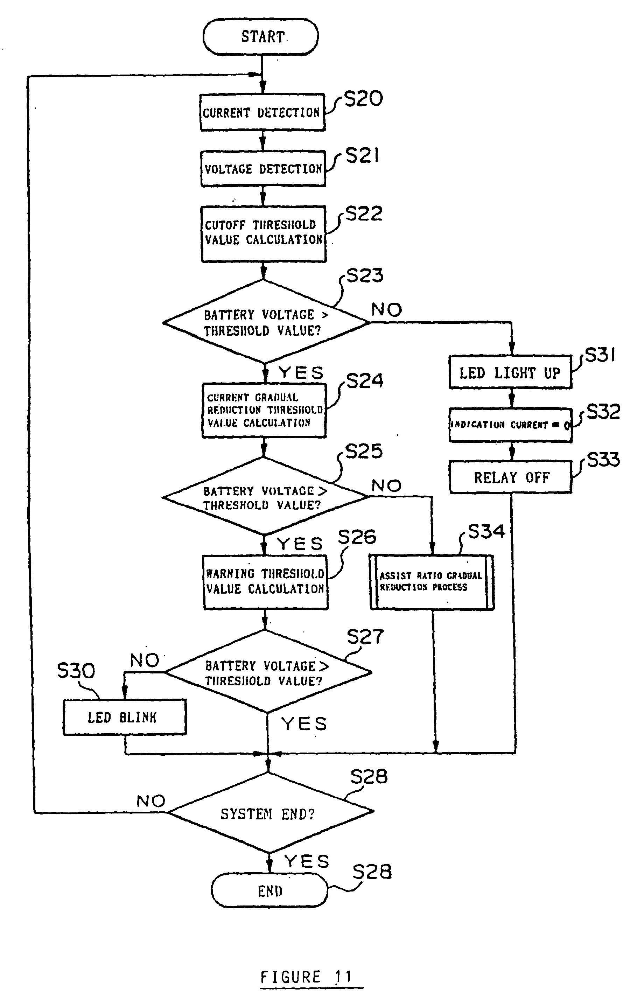

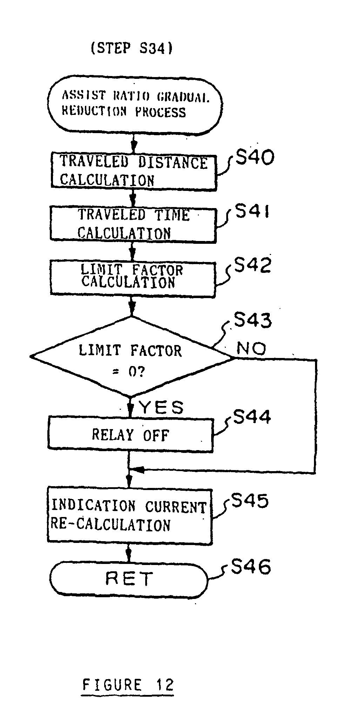

Next, the function of the motor-assisted bicycle constituted as described above will be described in reference to FIGs. 11 and 12. When the bicycle is pedalled, value of the current flowing to the motor 36 and the voltage at that time are detected (steps S20, S21). Next, according to the current value I flowing to the motor 36 and the internal resistance of the batteries 39, the third threshold value $V_{th3}$ is calculated or read (step S22). The third threshold value $V_{th3}$ is for discriminating

whether or not the current supply to the motor 36 should be stopped. Next, the process goes to the step S23 to compare the third threshold value $V_{th3}$ with the battery voltage V or v - IR of the batteries 39.

When the battery voltage V is greater than the third threshold value $V_{th3}$, discrimination result in the step S23 is YES and the process goes to the step S24 and the second threshold value $V_{th2}$ is calculated or read. The second threshold value $V_{th2}$ is for discriminating whether or not the assist torque should be gradually decreased when the battery voltage has considerably decreased. Next, the process goes to the step S25 to compare the second threshold value $V_{th2}$ with the battery voltage V.

When the battery voltage V is greater than the second threshold value $V_{th2}$, discrimination result in the step S25 is YES and the process goes to the step S26 and the first threshold value $V_{th1}$ is calculated or read. The first threshold value $V_{th1}$ is for discriminating whether or not the rider should be warned when the battery voltage has decreased to some extent. Next, the process goes to the step S27 to compare the first threshold value $V_{th1}$ with the battery voltage V.

When the battery voltage V is greater than the first threshold value $V_{th1}$, discrimination result in the step S27 is YES and the process goes to the step S28 and whether or not the assist torque control system should be ended is discriminated. There are two cases in ending the control system; one is turning off the main switch and the other is reducing the assist torque to zero. In either case, the process goes to the step S29 to end the control system; otherwise the process returns to the step S20 and repeats the steps S20 - S29.

The above is the process in which the battery 39 voltage V is sufficient. When the battery voltage decreases to or below the first threshold value $V_{th1}$, discrimination result in the step S27 is NO and the process goes to the step S30 to blink the LED. Thereafter the process goes through the steps S20 - S30, and S28. When the battery voltage V decreases further to or below the second threshold value $V_{th2}$, the discrimination result in the step S25 is NO and the process goes to the step S34 to carry out the assist ratio gradual reduction process.

FIG. 12 is a flow chart of the assist ratio gradual reduction process. First the traveled distance and the traveled time from the start of the assist ratio gradual reduction process are calculated steps S40 and S41, and the limit factor is calculated S42. The limit factor is calculated as described before from at least one of the traveled distance and the traveled time as shown in FIG. 10(A) or FIG. 10(B). When the limit factor is not zero, the process goes from the step S43 to the step S45 and performs calculations of the indication current and multiplication of the indication current with the limit factor. Next, the process returns to the step S28 in the main roatine and thereafter the process circulates through the steps S20 - S34, and S28.

While the above process is repeated, since the assist ratio gradually decreases to zero, the discrimination result in the step S43 at that time is YES and the process goes to the step S44 to set a relay 111 to off. The calculation result of the indication current in the next step S45 becomes zero. As a result, current supply to the motor 36 is completely stopped. As a result, the discrimination result in the step S28 of the main routine becomes YES and the process goes to the step S29 to end the control system.

The above is the process in which the battery 39 voltage V does not decrease below the third threshold value $V_{th3}$ before the limit factor becomes zero. When the main switch is turned on again after the limit value becomes zero and the control system is ended, the assist gradual reduction process is resumed from the beginning. In this embodiment, if the battery voltage V decreases below the third threshold value $V_{th3}$ while the assist gradual reduction process is carried out, the discrimination result in the step S23 is NO and the process goes to the step S31 to light up the LED which has been blinking.

The section 160 for warning, current gradual decrease, and cutoff discrimination outputs a signal for making the indication current zero to the indication current calculation section 101 and turns off the relay 111 steps S32, and S33 . As a result, current supply to the motor 36 is completely stopped and the assist torque becomes zero. As a result, the discrimination result in the step S28 of the main routine becomes YES and the process goes to the step S29 to end the control system.

In the power-assisted human-powered vehicle described above, since the LED is caused to blink when the battery voltage V decreases to or below the first threshold value $V_{th1}$, and the assist ratio is gradually decreased when the battery voltage V decreases to or below the second threshold value $V_{th2}$, the rider can learn the decrease in the battery voltage by the visual sense and the bodily feeling, and at the same time can anticipate the decrease in the assist ratio to zero. As a result, the rider can secure safety even when the load on the rider increases at that time. Since the load on the rider increases gradually, shocks are small and the rider can ride safely.

This invention is not limited to the above embodiments but may be modified in various ways as described below.

①  A sound warning with a buzzer or the like may be used in place of or in addition to the LED.
②  While two or three threshold values are set in the above embodiments, more number of threshold values may be set. For example, a process may be arranged according to the battery voltage in the order of; LED blinking, buzzer sound, assist ratio gradual reduction, and control system stop.
③  A constitution may be arranged to produce a buzzer sound when the assist ratio gradual reduction process is started.
④  Two levels of threshold values may be set to start the assist ratio gradual reduction process at the first level and stop the control system at the second level.
⑤  Besides the assist ratio gradual reduction process, the control may be made to give the rider a feeling of disorder by reducing the assist ratio to a half for example.

As described above, with the power-assisted human-powered vehicle of this invention, optimum threshold values are continuously set according to the current value of the secondary battery to enable reliable control while monitoring the secondary battery voltage. Since the upper limit of the threshold value is set within a low current value range, the battery voltage does not decrease below the threshold value because of voltage drop immediately after starting discharge even with old batteries, the secondary batteries can be used effectively. Since the lower limit of the threshold value is set within a high current value range, the secondary batteries are prevented from being excessively discharged and the battery life is extended by carrying out appropriate process such as stopping the control system when the battery voltage decreases to or below the threshold value.

**Claims**

1.   Electrically assisted pedal operated vehicle, in particular bicycle, comprising a human power drive system (31, 32, 33, 34) and an electrical drive system (34) provided in parallel to each other, whereby said electrical drive system (34) further comprises an electric motor (36) and at least one battery (39) as a power source for said electric motor (36), and a control system (42) for controlling an assist torque of said electrical drive system (34) in accordance with a torque applied to said human power drive system (31, 32, 33, 34) by a user of said vehicle, **characterized by** a means (108) for determining at least one threshold value ($V_{th1}$, $V_{th2}$) variable according to the current value of said at least one battery for controlling the discharge of said at least one battery (39).

2.   Electrically assisted pedal operated vehicle according to claim 1, **characterized by** control means (104) for controlling the current from said battery (39) in accordance with said torque applied to said human power drive system (31, 32, 33, 34), voltage detection means (105) for detecting the voltage of said battery (39), and current detection means (135) for detecting the value of said current.

3.   Electrically assisted pedal operated vehicle according to claim 1 or 2, **characterized in that** said means (108) for determining said at least one threshold value ($V_{th1}$, $V_{th2}$) is capable of continuously changing said threshold value ($V_{th1}$, $V_{th2}$) to be generally constant when said current value is between zero and a first limit value ($I_1$).

4. Electrically assisted pedal operated vehicle according to one of claims 1 to 3, **characterized in that** said means (108) for determining said at least one threshold value ($V_{th1}$, $V_{th2}$) is capable of continuously changing said threshold value ($V_{th1}$, $V_{th2}$) so that said threshold. value ($V_{th1}$, $V_{th2}$) decreases with the increase of said current value to be generally constant when said current value is equal to or larger than a second limit value ($I_2$) being smaller than a possible maximum value of said current.

5. Electrically assisted pedal operated vehicle according to one of claims 1 to 4, **characteriz by** a warning cutoff determination section (110) for comparing said battery voltage with said at least one threshold value ($V_{th1}$, $V_{th2}$) and for indicating and cutting off the current supply to said electric motor (36) when the remaining battery voltage is small.

6. Electrically assisted pedal operated vehicle according to claim 5, **characterized in that** said means (108) for determining said at least one threshold value is capable of determining a plurality of threshold values ($V_{th1}$, $V_{th2}$) of different levels.

7. Electrically assisted pedal operated vehicle according to claim 6, **characterized in that** said warning cutoff determination section (110) is capable of indicating that the remaining battery voltage is small with different means and dependent on the amount of the remaining voltage.

8. Electrically assisted pedal operated vehicle according to one of claims 5 to 7, **characterized in that** said warning cutoff determination section (110) is capable of gradually decreasing the ratio of said assist torque to said torque applied to said human power drive system (31, 32, 33, 34) as an indication of low remaining battery voltage.

9. Electrically assisted pedal operated vehicle according to one of claims 6 to 8, **characterized in that** **said** plurality of threshold values ($V_{th1}$, $V_{th2}$) are present in two levels and that said warning cutoff determination section (110) is capable of indicating by means of a light device and/or a sound device that the battery voltage is below the higher lever, and by means of a force device for increasing a torque resistance of said human power drive system (31, 32, 33, 34) that the battery voltage is below the second level being lower than the first level.

10. Electrically assisted pedal operated vehicle according to claim 9, **characterized in that** said warning cutoff determination section (110) is capable of gradually decreasing the ratio of said assist torque to said torque applied to said human power drive system (31, 32, 33, 34) when said battery voltage is below said second level.

11. Electrically assisted pedal operated vehicle according to claim 10, **characterized in that** said warning cutoff determination section (110) is capable of gradually decreasing said ratio to zero.

12. Electrically assisted pedal operated vehicle according to one of claims 6 to 11, **characterized in that** said means (108) for determining said plurality of threshold values ($V_{th1}$, $V_{th2}$) is capable of determining said threshold values at three levels and that said warning cutoff determination section (110) is capable of indicating by means of light means and/or sound means that said battery voltage is passing the maximum level, by means of a force device for gradually decreasing the ratio of said assist torque to said torque applied to said human power drive system (31, 32, 33, 34) that said battery voltage is passing the medium level, and by means of said force device that said battery voltage is passing the minimum level.

13. Method of controlling the discharge of at least one battery for an electric motor of an electrically assisted pedal operated vehicle, in particular bicycle, comprising a human power drive system (31, 32, 33, 34) and an electrical drive system (34) provided in parallel to each other, whereby said electrical drive system (34) further comprises an electric motor (36) and at least one battery (39) as a power source for said electric motor (36), and a control system (42) for controlling an assist torque of said electrical drive system (34) in accordance with a torque applied to said human power drive system (31, 32, 33, 34) by a user of said vehicle, **characterized in that** at least one variable threshold value is determined according to the detected current value of said battery and that the discharge of said battery is controlled in dependence of the current values detected.

14. Method according to claim 13, **characterized in that** said at least one threshold value is continuously changed when said current value is between zero and a first limit value.

15. Method according to claim 14, **characterized in that** said at least one threshold value is continuously changed such that said threshold value decreases with the increase of said current value to be generally constant when said current value is equal to or larger than a second limit value which is smaller than a possible maximum value of said current value.

16. Method according to one of claims 13 to 15, **characterized by** comparing said battery voltage with said at least one threshold value and indicating that said battery voltage passes said threshold value by cutting off the current supply for said electric motor.

17. Method according to one of claims 13 to 16, **characterized in that** a plurality of threshold values are determined.

18. Method according to one of claims 16 or 17, **characterized in that** a ratio of said assist torque and said torque applied to said human power drive system is gradually decreased as an indication of low remaining battery voltage.

19. Method according to one of claims 17 or 18, **characterized in that** said plurality of threshold values is arranged in two levels and that a light device and/or a sound device indicate that said battery voltage passes the higher level and that a torque resistance of said human power device system is increased when said battery power passes the second level.

20. Method according to claim 19, **characterized in that** said ratio of said assist torque to said torque applied to said human power drive system is gradually decreased when said battery voltage is below said second level or that said ratio is gradually decreased to zero.

21. Method according to one of claims 17 to 20, **characterized by** determining a plurality of threshold values at three levels, indicating by light and/or sound that said battery voltage passes the maximum level, gradually decreasing the ratio of assist torque and said torque applied to said human power drive system when said battery voltage passes the medium level and further decreasing said ratio when said battery voltage passes the minimum level.

**Patentansprüche**

1. Elektrisch unterstütztes, pedalbetätigtes Fahrzeug, insbesondere ein Fahrrad, mit einem Menschenkraft- Antriebssystem (31, 32,33, 34) und einem parallel dazu vorgesehenen elektrischem Antriebssystem (34), wobei das elektrische Antriebssystem (34) außerdem einen Elektromotor (36) und zumindest eine Batterie (39) als eine Energiequelle für den Elektromotor (36) aufweist, und einem Steuerungssystem (42) zum Steuern eines Unterstützungsdrehmomentes des elektrischen Antriebssystems (34) in Übereinstimmung mit einem Drehmoment, aufgebracht durch einen Benutzer des Fahrzeuges auf das Menschenkraft- Antriebssystem (31, 32, 33, 34), **gekennzeichnet durch** eine Einrichtung (108) zum Bestimmen zumindest eines Grenzwertes ($V_{th1}$, $V_{th2}$), veränderbar entsprechend eines Stromwertes der zumindest einen Batterie zum Steuern der Entladung der zumindest einen Batterie (39).

2. Elektrisch unterstütztes, pedalbetätigtes Fahrzeug nach Anspruch 1, **gekennzeichnet durch** eine Steuereinrichtung (104) zum Steuern des Stromes aus der Batterie (39) in Übereinstimmung mit dem Drehmoment, angewandt auf das Menschenkraft-Antriebssystem (31, 32, 33, 34), eine Spannungserfassungseinrichtung (105) zum erfassen der Spannung der Batterie (39) und eine Stromerfassungseinrichtung (135) zum Erfassen des Wertes des Stromes.

3. Elektrisch unterstütztes, pedalbetätigtes Fahrzeug nach Anspruch 1 oder 2, **dadurch gekennzeichnet, daß** die Einrichtung (108) zum Bestimmen des zumindest einen Grenzwertes ($V_{th1}$, $V_{th2}$) in der Lage ist, kontinuierlich den Grenzwert ($V_{th1}$, $V_{th2}$) zu ändern, so daß er im wesentlichen konstant ist, wenn der Stromwert zwischen Null und einem ersten Grenzwert ($I_1$) ist.

4. Elektrisch unterstütztes, pedalbetätigtes Fahrzeug nach einem der Ansprüche 1 bis 3, **dadurch gekennzeichnet, daß** die Einrichtung (108) zum Bestimmen des zumindest einen Grenzwertes ($V_{th1}$, $V_{th2}$) in der Lage ist, kontinuierlich den Grenzwert ($V_{th1}$, $V_{th2}$) zu ändern, so daß der Grenzwert mit der Zunahme des Stromwertes abnimmt, um im wesentlichen konstant zu sein, wenn der Stromwert gleich zu oder größer als ein zweiter Grenzwert ($I_2$) ist, der kleiner als der mögliche Maximalwert des Stromes ist.

5. Elektrisch unterstütztes, pedalbetätigtes Fahrzeug nach einem der Ansprüche 1 bis 4, **gekennzeichnet durch** einen Warnabschalt- Bestimmungsabschnitt (110) zum Vergleichen der Batteriespannung mit dem zumindest einem Grenzwert ($V_{th1}$, $V_{th2}$) und zum Anzeigen und Trennen der Stromzuführungzu dem Elektromotor (36), wenn die verbleibende Batteriespannung klein ist.

6. Elektrisch unterstütztes, pedalbetätigtes Fahrzeug nach Anspruch 5, **dadurch gekennzeichnet, daß** die Einrichtung (108) des zumindest einen Grenzwertes ($V_{th1}$, $V_{th2}$) in der Lage ist, eine Mehrzahl von Grenzwerten ($V_{th1}$, $V_{th2}$) von unterschiedlichen Niveaus zu bestimmen.

**7.** Elektrisch unterstütztes, pedalbetätigtes Fahrzeug nach Anspruch 6, **dadurch gekennzeichnet, daß** der Warnabschalt- Bestimmungsabschnitt (110) in der Lage ist, mit verschiedenen Mitteln und in Abhängigkeit von der Größe der verbleibenden Spannung anzuzeigen, daß die verbleibende Batteriespannung klein ist.

**8.** Elektrisch unterstütztes, pedalbetätigtes Fahrzeug nach einem der Ansprüche 5 bis 7, **dadurch gekennzeichnet, daß** der Warnabschalt- Bestimmungsabschnitt (110) in der Lage ist, allmählich das Verhältnis des Unterstützungsdrehmomentes zu dem Drehmoment, angewandt auf das Menschenkraft- Antriebssystem (31, 32, 33, 34), als ein Anzeichen von geringer Restbatteriespannung zu vermindern.

**9.** Elektrisch unterstütztes, pedalbetätigtes Fahrzeug nach einem der Ansprüche 6 bis 8, **dadurch gekennzeichnet, daß** die Mehrzahl der Grenzwerte ($V_{th1}$, $V_{th2}$) in zwei Niveaus vorhanden ist und daß der Warnabschalt- Bestimmungsabschnitt (110) in der Lage ist, durch eine Lichtvorrichtung und / oder eine Klangvorrichtung anzuzeigen, daß Batteriespannung unter dem höheren Niveau ist, und durch eine Kraftvorrichtung zum Erhöhen eines Drehmomentwiderstandes des Menschenkraft- Antriebssystems (31, 32, 33, 34), daß die Batteriespannung unter dem zweiten Niveau ist, das niedriger als das erste Niveau ist.

**10.** Elektrisch unterstütztes, pedalbetätigtes Fahrzeug nach Anspruch 9, **dadurch gekennzeichnet, daß** der Warnabschalt- Bestimmungsabschnitt (110) in der Lage ist, allmählich das Verhältnis des Unterstützungsdrehmomentes zu dem Drehmoment, angewandt auf das Menschenkraft- Antriebssystem (31, 32, 33, 34) zu vermindern, wenn die Batteriespannung unter dem zweiten Niveau ist.

**11.** Elektrisch unterstütztes, pedalbetätigtes Fahrzeug nach Anspruch 10, **dadurch gekennzeichnet, daß** der Warnabschalt- Bestimmungsabschnitt (110) in der Lage ist, allmählich das Verhältnis auf Null zu vermindern.

**12.** Elektrisch unterstütztes, pedalbetätigtes Fahrzeug nach einem der Ansprüche 6 bis 11, **dadurch gekennzeichnet, daß** die Einrichtung (108) zum Bestimmen der Mehrzahl von Grenzwerten ($V_{th1}$, $V_{th2}$) in der Lage ist, die Grenzwerte auf drei Niveaus zu bestimmen und daß der Warnabschalt- Bestimmungsabschnitt (110) in der Lage ist, mittels einer Lichteinrichtung und / oder einer Klangeinrichtung anzuzeigen, daß die Batteriespannung das maximale Niveau passiert, mittels einer Kraftvorrichtung zum allmählichen Vermindern des Verhältnisses des Unterstützungsdrehmomentes zu dem auf das Menschenkraft- Antriebssystems (31, 32, 33, 34) angewandte Drehmoment, daß die Batteriespannung das mittlere Niveau passiert, und mittels der Kraftvorrichtung, daß die Batteriespannung das minimale Niveau passiert.

**13.** Verfahren zum Steuern der Entladung von zumindest einer Batterie für einen Elektromotor eines elektrisch unterstützten, pedalbetätigten Fahrzeuges, insbesondere eines Fahrrades, mit einem Menschenkraft- Antriebssystem (31, 32, 33, 34) und einem parallel dazu vorgesehenen elektrischen Antriebssystem (34), wobei das elektrische Antriebssystem (34) außerdem einen Elektromotor (36) und zumindest eine Batterie (39) als eine Energiequelle für den Elektromotor (36) aufweist, und ein Steuerungssystem (42) zum Steuern eines Unterstützungsdrehmomentes des elektrischen Antriebssystems (34) in Übereinstimmung mit einem Drehmoment, angewandt durch einen Benutzer des Fahrzeuges auf das Menschenkraft- Antriebssystem (31, 32, 33, 34), **dadurch gekennzeichnet, daß** zumindest ein variabler Grenzwert bestimmt ist nach dem erfaßten Stromwert der Batterie und daß die Entladung der Batterie in Abhängigkeit des erfaßten Stromwertes gesteuert wird.

**14.** Verfahren nach Anspruch 13, **dadurch gekennzeichnet, daß** zumindest ein Grenzwert kontinuierlich verändert wird, wenn der Stromwert zwischen Null und einem ersten Grenzwert ist.

**15.** Verfahren nach Anspruch 14, **dadurch gekennzeichnet, daß** zumindest ein Grenzwert kontinuierlich verändert wird, so daß sich der Grenzwert mit der Zunahme des Stromwertes vermindert, um im wesentlichen konstant zu sein, wenn der Stromwert gleich ist zu oder größer als ein zweiter Grenzwert, der kleiner als ein möglicher Maximalwert des Stromwertes ist.

**16.** Verfahren nach einem der Ansprüche 13 bis 15, **gekennzeichnet durch** Vergleichen der Batteriespannung mit dem zumindest einen Grenzwert und Anzeigen, daß die Batteriespannung den Grenzwert passiert, **durch** Abschalten der Stromzuführung für den Elektromotor.

**17.** Verfahren nach einem der Ansprüche 13 bis 16, **dadurch gekennzeichnet, daß** eine Mehrzahl von Grenzwerten bestimmt wird.

**18.** Verfahren nach einem der Ansprüche 16 oder 17, **dadurch gekennzeichnet, daß** ein Verhältnis des Unterstützungsdrehmomentes und des auf das Menschenkraft-Antriebssystem angewandten Drehmomentes als ein Anzeichen von geringer Restbatteriespannung allmählich vermindert wird.

19. Verfahren nach einem der Ansprüche 17 oder 18, **dadurch gekennzeichnet, daß** die Mehrzahl der Grenzwerte in zwei Niveaus angeordnet ist und daß eine Lichtvorrichtung und/oder eine Klangvorrichtung anzeigt, daß die Batteriespannung das höhere Niveau passiert und daß ein Drehmomentwiderstand des Menschenkraft- Antriebssystems erhöht wird, wenn die Batterieenergie das zweite Niveau passiert.

20. Verfahren nach Anspruch 19, **dadurch gekennzeichnet, daß** das Verhältnis des Unterstützungsdrehmomentes und zu dem auf das Menschenkraft-Antriebssystem angewandten Drehmoment allmählich vermindert wird, wenn die Batteriespannung unter dem zweiten Niveau ist, oder daß das Verhältnis allmählich auf Null vermindert wird.

21. Verfahren nach einem der Ansprüche 17 bis 20, **gekennzeichnet durch** Bestimmen einer Mehrzahl von Grenzwerten auf drei Niveaus, Anzeigen **durch** Licht und/oder Klang, daß die Batteriespannung das maximale Niveau passiert, allmähliches Vermindern des Verhältnisses des Unterstützungsdrehmomentes und des auf das Menschenkraft-Antriebssystem angewandten Drehmomentes, wenn die Batteriespannung das mittlere Niveau passiert und weiter Vermindern des Verhältnisses, wenn die Batteriespannung das minimale Niveau passiert.

## Revendications

1. Véhicule à entraînement par pédales et à assistance électrique, en particulier une bicyclette, comprenant un système d'entraînement par énergie humaine (31, 32, 33, 34) et un système d'entraînement électrique (34) aménagés parallèlement l'un par rapport à l'autre, dans lequel ledit système d'entraînement électrique (34) comprend en outre un moteur électrique (36) et au moins une batterie (39) en tant que source de puissance destinée au dit moteur électrique (36), et un système de commande (42) destiné à commander un couple d'assistance dudit système d'entraînement électrique (34) en fonction d'un couple appliqué sur ledit système d'entraînement par énergie humaine (31, 32, 33, 34) par un utilisateur dudit véhicule, **caractérisé par** des moyens (108) destinés à déterminer au moins une valeur de seuil (Vth1, Vth2) variable en fonction de la valeur de courant de ladite au moins une batterie afin de commander la décharge de ladite au moins une batterie (39).

2. Véhicule à entraînement par pédales et à assistance électrique selon la revendication 1, **caractérisé par** des moyens de commande (104) destinés à commander le courant en provenance de ladite batterie (39) en fonction dudit couple appliqué sur ledit système d'entraînement par énergie humaine (31, 32, 33, 34), des moyens de détection de tension (105) destinés à détecter la tension de ladite batterie (39), et des moyens de détection de courant (135) destinés à détecter la valeur dudit courant.

3. Véhicule à entraînement par pédales et à assistance électrique selon la revendication 1 ou la revendication 2, **caractérisé en ce que** lesdits moyens (108) destinés à déterminer ladite au moins une valeur de seuil (Vth1, Vth2) sont capables de modifier de manière continue ladite valeur de seuil (Vth1, Vth2) afin qu'elle soit constante de manière générale lorsque ladite valeur de courant se situe entre zéro et une première valeur limite (I1).

4. Véhicule à entraînement par pédales et à assistance électrique selon l'une des revendications 1 à 3, **caractérisé en ce que** lesdits moyens (108) destinés à déterminer ladite au moins une valeur de seuil (Vth1, Vth2) sont capables de modifier de manière continue ladite valeur de seuil (Vth1, Vth2) de sorte que ladite valeur de seuil (Vth1, Vth2) diminue avec l'augmentation de ladite valeur de courant afin qu'elle soit constante de manière générale lorsque ladite valeur de courant est égale ou supérieure à une seconde valeur limite (I2) qui est plus faible qu'une valeur maximale possible dudit courant.

5. Véhicule à entraînement par pédales et à assistance électrique selon l'une des revendications 1 à 4, **caractérisé par** une section de détermination de coupure d'avertissement (110) destinée à comparer ladite tension de la batterie avec ladite au moins une valeur de seuil (Vth1 Vth2) et à indiquer et à couper l'alimentation en courant au dit moteur électrique (36) lorsque la tension résiduelle de la batterie est faible.

6. Véhicule à entraînement par pédales et à assistance électrique selon la revendication 5, **caractérisé en ce que** lesdits moyens (108) destinés à déterminer ladite au moins une valeur de seuil sont capables de déterminer une pluralité de valeurs de seuil (Vth1, Vth2) de différents niveaux.

7. Véhicule à entraînement par pédales et à assistance électrique selon la revendication 6, **caractérisé en ce que** ladite section de détermination de coupure d'avertissement (110) est capable d'indiquer que la tension résiduelle de la batterie est faible grâce à différents moyens et en fonction de la valeur de la tension résiduelle.

**8.** Véhicule à entraînement par pédales et à assistance électrique selon l'une des revendications 5 à 7, **caractérisé en ce que** ladite section de détermination de coupure d'avertissement (110) est capable de réduire progressivement le rapport entre ledit couple d'assistance et ledit couple appliqué sur ledit système d'entraînement par énergie humaine (31, 32, 33, 34) en tant qu'indication d'une faible tension résiduelle de la batterie.

**9.** Véhicule à entraînement par pédales et à assistance électrique selon l'une des revendications 6 à 8, **caractérisé en ce que** ladite pluralité de valeurs de seuil (Vth1, Vth2) est présente à deux niveaux et **en ce que** ladite section de détermination de coupure d'avertissement (110) est capable d'indiquer au moyen d'un dispositif lumineux et / ou d'un dispositif sonore que la tension de la batterie se situe en dessous du niveau le plus élevé, et au moyen d'un dispositif de force destiné à augmenter une résistance de couple dudit système d'entraînement par énergie humaine (31, 32, 33, 34) que la tension de la batterie se situe en dessous du second niveau qui est inférieur au premier niveau.

**10.** Véhicule à entraînement par pédales et à assistance électrique selon la revendication 9, **caractérisé en ce que** ladite section de détermination de coupure d'avertissement (110) est capable de réduire progressivement le rapport entre ledit couple d'assistance et ledit couple appliqué sur ledit système d'entraînement par énergie humaine (31, 32, 33, 34) lorsque ladite tension de la batterie se situe en dessous dudit second niveau.

**11.** Véhicule à entraînement par pédales et à assistance électrique selon la revendication 10, **caractérisé en ce que** ladite section de détermination de coupure d'avertissement (110) est capable de réduire progressivement ledit rapport jusqu'à zéro.

**12.** Véhicule à entraînement par pédales et à assistance électrique selon l'une des revendications 6 à 11, **caractérisé en ce que** lesdits moyens (108) destinés à déterminer ladite pluralité de valeurs de seuil (Vth1 Vth2) sont capables de déterminer lesdites valeurs de seuil à trois niveaux et **en ce que** ladite section de détermination de coupure d'avertissement (110) est capable d'indiquer par l'intermédiaire de moyens lumineux et / ou de moyens sonores que ladite tension de la batterie dépasse le niveau maximal, au moyen d'un dispositif de force destiné à réduire progressivement le rapport entre ledit couple d'assistance et ledit couple appliqué sur ledit système d'entraînement par énergie humaine (31, 32, 33, 34) que ladite tension de la batterie passe sous le niveau intermédiaire, et au moyen dudit dispositif de force que ladite tension de la batterie passe sous le niveau minimal.

**13.** Procédé de commande de la décharge d'au moins une batterie destinée à un moteur électrique d'un véhicule à entraînement par pédales et à assistance électrique, en particulier une bicyclette, comprenant un système d'entraînement par énergie humaine (31, 32, 33, 34) et un système d'entraînement électrique (34) aménagés parallèlement l'un par rapport à l'autre, dans lequel ledit système d'entraînement électrique (34) comprend en outre un moteur électrique (36) et au moins une batterie (39) en tant que source de puissance destinée au dit moteur électrique (36), et un système de commande (42) destiné à commander un couple d'assistance dudit système d'entraînement électrique (34) en fonction d'un couple appliqué sur ledit système d'entraînement par énergie humaine (31, 32, 33, 34) par un utilisateur dudit véhicule, **caractérisé en ce que** au moins une valeur de seuil variable est déterminée en fonction de la valeur de courant détectée de ladite batterie et **en ce que** la décharge de ladite batterie est commandée en fonction des valeurs de courant détectées.

**14.** Procédé selon la revendication 13, **caractérisé en ce que** ladite au moins une valeur de seuil est modifiée de manière continue lorsque ladite valeur de courant se situe entre zéro et une première valeur limite.

**15.** Procédé selon la revendication 14, **caractérisé en ce que** ladite au moins une valeur de seuil est modifiée de manière continue de sorte que ladite valeur de seuil diminue avec l'augmentation de ladite valeur de courant afin qu'elle soit constante de manière générale lorsque ladite valeur de courant est égale ou supérieure à une seconde valeur limite qui est inférieure à une valeur maximale possible de ladite valeur de courant.

**16.** Procédé selon l'une des revendications 13 à 15, **caractérisé par** la comparaison de ladite tension de la batterie et de ladite au moins une valeur de seuil et par l'indication que ladite tension de la batterie dépasse ladite valeur limite en coupant l'alimentation en courant destinée au dit moteur électrique.

**17.** Procédé selon l'une des revendications 13 à 16, **caractérisé en ce qu'**une pluralité de valeurs de seuil est déterminée.

**18.** Procédé selon l'une des revendications 16 ou 17, **caractérisé en ce qu'**un rapport entre ledit couple d'assistance et ledit couple appliqué sur ledit système d'entraînement par énergie humaine est progressivement réduit en tant qu'indication d'une faible tension résiduelle dans la batterie.

**19.** Procédé selon l'une des revendications 17 ou 18, **caractérisé en ce que** ladite pluralité de valeurs de seuil est aménagée sur deux niveaux et **en ce qu'**un dispositif lumineux et / ou un dispositif sonore indique que ladite tension de la batterie dépasse le niveau supérieur et qu'une résistance de couple dudit système d'entraînement par énergie humaine est augmentée lorsque ladite puissance de la batterie passe sous le second niveau.

**20.** Procédé selon la revendication 19, **caractérisé en ce que** ledit rapport entre ledit couple d'assistance et ledit couple appliqué sur ledit système d'entraînement par énergie humaine se réduit progressivement lorsque ladite tension de la batterie se situe en dessous dudit second niveau ou que ledit rapport se réduit progressivement jusqu'à zéro.

**21.** Procédé selon l'une des revendications 17 à 20, **caractérisé par** la détermination d'une pluralité de valeurs de seuil sur trois niveaux, par l'indication lumineuse et / ou sonore que ladite tension de la batterie dépasse le niveau maximal, par la réduction progressive du rapport entre ledit couple d'assistance et ledit couple appliqué sur ledit système d'entraînement par énergie humaine lorsque ladite tension de la batterie passe sous le niveau intermédiaire et par une réduction encore plus importante dudit rapport lorsque ladite tension de la batterie passe sous le niveau minimal.

FIGURE 1

EP 0 729 880 B1

FIGURE 2

EP 0 729 880 B1

VOLTAGE

A

B

TIME

FIGURE 3

THRESHOLD VALUE

(V)

$V_1$

V

O                    BATTERY CURRENT ( I )

FIGURE 4

THRESHOLD VALUE

(V)

$V_1$

$V_2$

$V_{f01}$

$V_{f11}$

$V_{th1}$

$V_{th2}$

$V_{f02}$

$V_{f12}$

O    $I_1$                    $I_2$  BATTERY CURRENT ( I )

FIGURE 5

FIGURE 6

FIGURE 7

FIGURE 8

EP 0 729 880 B1

FIGURE 9

EP 0 729 880 B1

FIGURE 10A

FIGURE 10B

START

CURRENT DETECTION — S20

VOLTAGE DETECTION — S21

CUTOFF THRESHOLD VALUE CALCULATION — S22

S23
BATTERY VOLTAGE > THRESHOLD VALUE? — NO

YES — S24
CURRENT GRADUAL REDUCTION THRESHOLD VALUE CALCULATION

S25
BATTERY VOLTAGE > THRESHOLD VALUE? — NO

YES — S26
WARNING THRESHOLD VALUE CALCULATION

LED LIGHT UP — S31

INDICATION CURRENT = 0 — S32

RELAY OFF — S33

S34
ASSIST RATIO GRADUAL REDUCTION PROCESS

S27
NO — BATTERY VOLTAGE > THRESHOLD VALUE?

S30
LED BLINK

YES

S28
NO — SYSTEM END?

YES — S28
END

FIGURE 11

(STEP S34)

FIGURE 12